# EUROPÄISCHE PATENTSCHRIFT

(11) **EP 1 674 494 B1**
(45) Veröffentlichungstag und Bekanntmachung des Hinweises auf die Patenterteilung: **05.03.2008**
(21) Anmeldenummer: 05027034.7
(22) Anmeldetag: 10.12.2005
(51) Int. Cl.: C08G 18/66, C08G 18/73, C08K 5/00

(54) **Aliphatische sinterfähige thermoplastische Polyurethane und deren Verwendung**
Aliphatic sinterable thermoplastic polyurethanes and their use
Polyuréthannes thermoplastiques, aliphatiques, frittables et leur utilisation

(30) Priorität: 24.12.2004 DE 102004062476
(43) Veröffentlichungstag der Anmeldung: 28.06.2006
(73) Patentinhaber: Bayer MaterialScience AG, 51368 Leverkusen (DE)
(72) Erfinder: Peerlings, Henricus, Dr., 42699 Solingen (DE); Kaufhold, Wolfgang, Dr., 51061 Köln (DE)

(56) Entgegenhaltungen:
- EP-A- 1 149 851
- EP-A- 1 241 201
- EP-A- 1 245 639
- EP-A- 1 336 631

## Beschreibung

Die vorliegende Erfindung betrifft aliphatische, lichtstabile, sinterfähige, thermoplastische Polyurethanformmassen mit verbessertem Knickverhalten, mit geringem Fogging, guter thermischer Beständigkeit, angenehmer Haptik und guter technischer Verarbeitbarkeit sowie deren Verwendung.

Thermoplastische Polyurethane (TPU) sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983 gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Der Aufbau der thermoplastisch verarbeitbaren Polyurethanelastomere kann entweder schrittweise (Prepolymerdosierverfahren) oder durch die gleichzeitige Reaktion aller Komponente in einer Stufe (one-shot-Dosierverfahren) erfolgen.

In DE-A 19 927 967, DE-A 19 825 228 und EP-A 0 928 812 wird der Einsatz von Weichmachern in TPUs für die Anwendung sinterfähiger TPU-Pulver im Automobilinnenbereich mittels Powder-Slush-Verfahren beschrieben.

In DE-A 10 050 495, DE-A 10 206 839 und EP-A 1 028 132 werden Gemische aus bestimmten Kettenverlängerern und physikalische Gemische von TPUs auf Basis verschiedener Kettenverlängerer für Powder-Slush-Anwendungen beschrieben.

In DE-A 19 940 014 werden TPUs auf Basis von Gemischen aus aliphatischen Diisocyanaten für Powder-Slush-Anwendungen beschrieben.

Bei der Verwendung von sinterfähigen Pulvern aus thermoplastischen Polyurethanen im so genannten Powder-Slush-Verfahren tritt aufgrund der hohen Kristallinität bei HDI-basierten aliphatischen TPUs bei der Entformung einer geslushten Haut das Problem der Knickfaltenbildung auf. Diese Knickfalten lassen sich nicht mehr entfernen, wodurch hohe Ausschussraten entstehen.

Aufgabe der vorliegenden Erfindung war es daher, thermoplastische, sinterfähige Polyurethane (TPU) zur Verfügung zu stellen, die ein geringeres Knickverhalten bzw. kein Knickverhalten bei gleichzeitig geringem bzw. keinem Fogging, guter thermischer Stabilität, angenehmer Haptik und guter technischer Verarbeitbarkeit zeigen. Die im Stand der Technik beschriebenen TPUs erfüllen diese Anforderungen nicht.

Diese Aufgabe konnte durch TPUs mit einer speziellen Zusammensetzung gelöst werden.

Gegenstand der vorliegenden Erfindung sind daher lichtstabile, sinterfähige, aliphatische, thermoplastische Polyurethane, die erhältlich sind aus
a) einer Isocyanatkomponente bestehend aus
   a1) 100 bis 75 Mol-% 1,6-Hexamethylendiisocyanat
   a2) 0 bis 25 Mol-% eines aliphatischen Diisocyanates oder eines Gemisches aus aliphatischen Diisocyanaten, ausgenommen 1,6-Hexamethylendiisocyanat
b) einer Kettenverlängerungskomponente bestehend aus
   b1) 100 bis 75 Mol% eines Kettenverlängerers aus der Gruppe bestehend aus
      1,2-Ethandiol, 1,3-Propandiol, 1,4-Butandiol, 1,5-Pentandiol, 1,6-Hexandiol, 1,10-Decandiol, 1,12-Dodecandiol, Diethylenglykol, Dipropylenglykol, Terephthalsäure-bis-ethylenglykol, Terephthalsäure-bis-1,4-butandiol, 1,4-Di(β-hydroxyethyl)-hydrochinon und 1,4-Di((3-hydroxyethyl)-bisphenol A
   b2) 0 bis 25 Mol% eines Kettenverlängerers mit einem Molekulargewicht von 60 bis 400 g/mol oder eines Gemisches aus Kettenverlängerern,
   wobei der Kettenverlängerer b1) nicht identisch ist mit dem Kettenverlängerer b2) und die rechnerische Summe der Prozentsätze aus a2) und b2) 2 bis 28 Mol-% beträgt,
c) mindestens einer Komponente mit einem zahlenmittleren Molekulargewicht von 450 bis 10 000 g/mol und im Mittel mindestens 1,8 bis höchstens 3,0 zerewitinoffaktiven Wasserstoffatomen,
   wobei das Verhältnis der Isocyanatgruppen in Komponente a) zu den gegenüber Isocyanat reaktiven Gruppen in Komponenten b), c) und gegebenenfalls h) 0,9:1 bis 1,1:1 beträgt, in Gegenwart von
d) 1 bis 30 Gew.-%, bezogen auf thermoplastisches Polyurethan, eines oder mehrerer Weichmacher mit einem zahlenmittleren Molekulargewicht von 200 bis 10000 g/mol,
e) gegebenenfalls Katalysatoren und unter Zusatz von
f) 0,1 bis 10 Gew.-%, bezogen auf thermoplastisches Polyurethan, Lichtstabilisatoren,
g) gegebenenfalls Zusatzmitteln und/oder Hilfsstoffen,
h) gegebenenfalls Kettenabbrechern.

Als organische Diisocyanate a2) können folgende aliphatische Diisocyanate zum Einsatz kommen: Ethylendiisocyanat, 1,4-Tetramethylendiisocyant, 1,12-Dodecandiisocyanat; cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische. Vorzugsweise verwendet werden 1,4-Cyclohexandiisocyanat, Isophorondiisocyanat und Dicyclohexylmethandiisocyanat. Die genannten Diisocyanate können einzeln oder in Form von Mischungen untereinander zur Anwendung kommen. Sie können auch zusammen mit bis zu 15 mol% (bezogen auf Gesamt-Isocyanatkomponente) eines Polyisocyanates verwendet werden, es darf aber höchstens soviel Polyisocyanat zugesetzt werden, dass ein noch thermoplastisch verarbeitbares Produkt entsteht.

Bevorzugt wird als Kettenverlängerer b1) ein Diol aus der Gruppe 1,2-Ethandiol, 1,3-Propandiol, 1,4-Butandiol, 1,5-Pentandiol, 1,6-Hexandiol, 1,10-Decandiol, 1,12-Dodecandiol, Diethylenglykol und Dipropylenglykol eingesetzt. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, wie z.B. 1,4-Di(β-hydroxyethyl)-hydrochinon und ethoxylierte Bisphenole, wie z.B. 1,4-Di(β-hydroxyethyl)-bisphenol A.

Kettenverlängerungsmittel b2) besitzen im Mittel vorzugsweise 1,8 bis 3,0 zerewitinoffaktive Wasserstoffatome und haben ein Molekulargewicht von 60 bis 400. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerer b2) wird eine Verbindung oder mehrere Verbindungen eingesetzt, die nicht dem Kettenverlängerer b1) entspricht und bevorzugt aus der Gruppe der aliphatischen Diole mit 2 bis 14 Kohlenstoffatomen ausgewählt ist, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol, Dipropylenglykol, 1,4-Cyclohexandiol, 1,4-Dimethanolcyclohexan und Neopentylglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin, aromatische Diamine, wie 2,4-Toluylendiamin, 2,6-Toluylendiamin, 3,5-Diethyl-2,4-toluylendiamin und 3,5-Diethyl-2,6-toluylendiamin und primäre mono-, di-, tri- oder tetraalkylsubstituierte 4,4'-Diaminodiphenylmethane. Besonders bevorzugt werden als Kettenverlängerer b2) Ethandiol, 1,4-Butandiol, 1,6-Hexandiol, 1,4-Dimethanolcyclohexan, 1,4-Di(β-hydroxyethyl)-hydrochinon oder 1,4-Di(β-hydroxyethyl)-bisphenol A verwendet. Daneben können auch kleinere Mengen an Triolen zugesetzt werden.

Als Komponente c) werden solche mit im Mittel mindestens 1,8 bis höchstens 3,0 zerewitinoffaktiven Wasserstoffatomen und einem zahlenmittleren Molekulargewicht Mₙ von 450 bis 10000 eingesetzt. Produktionsbedingt enthalten diese oft kleine Mengen an nicht-linearen Verbindungen. Häufig spricht man daher auch von "im wesentlichen linearen Polyolen". Bevorzugt sind Polyester-, Polyether-, Polycarbonat-Diole oder Gemische aus diesen.

Neben Aminogruppen, Thiolgruppen oder Carboxylgruppen aufweisenden Verbindungen sind insbesondere zwei bis drei, bevorzugt zwei Hydroxylgruppen aufweisende Verbindungen bevorzugt, speziell solche mit zahlenmittleren Molekulargewichten M̅ₙ von 450 bis 6000, besonders bevorzugt solche mit einem zahlenmittleren Molekulargewicht M̅ₙ von 600 bis 4500; Hydroxylgruppen aufweisende Polyester, Polyether und Polycarbonate sowie Polyesteramide sind insbesondere bevorzugt.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherpolyole sind ferner die hydroxylgruppenhaltigen Polymerisationsprodukte des Tetrahydrofurans. Es können auch trifunktionelle Polyether in Anteilen von 0 bis 30 Gew.% bezogen auf die bifunktionellen Polyether eingesetzt werden, jedoch höchstens in einer solchen Menge, dass ein noch thermoplastisch verarbeitbares Produkt entsteht. Die im wesentlichen linearen Polyether-Diole besitzen vorzugsweise zahlenmittlere Molekulargewichte M̅ₙ von 450 bis 6000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren, wie ω-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittlere Molekulargewichte M̅ₙ von 450 bis 10000 und können einzeln oder in Form von Mischungen untereinander zur Anwendung kommen.

Gegenüber Isocyanaten reagierende, monofunktionelle Verbindungen können in Anteilen bis zu 2 Gew.-%, bezogen auf TPU, als sogenannte Kettenabbrecher h) eingesetzt werden. Geeignet sind z.B. Monoamine, wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Als Weichmacher d) können Verbindungen eingesetzt werden, wie z.B. beschrieben in M. Szycher in M. Szycher's Handbook of Polyurethanes, 1999, CRC Press, Seite 8-28 bis 8-30. Beispielhaft seien genannt Phosphate, Carboxylate (wie z.B. Phthalate, Adipate, Sebacate), Silikone und Alkylsulfonsäureester. Aufgrund der Problematik, dass Weichmacher mit niedrigem Molekulargewicht zu Fogging beitragen sollte das zahlenmittlere Molekulargewicht Mₙ des Weichmachers mehr als 200 g/mol betragen.

Die relativen Mengen der zerewitinoffaktiven Verbindungen werden bevorzugt so gewählt, dass das Verhältnis der Summe der Isocyanatgruppen zu der Summe der zerewitinoffaktiven Wasserstoffatome 0,9:1 bis 1,1:1 beträgt.

Die erfindungsgemäßen, thermoplastischen Polyurethane können als Hilfs- und Zusatzstoffe g) bevorzugt bis zu 10 Gew.-%, bezogen auf die Gesamtmenge an TPU, der üblichen Hilfs- und Zusatzstoffe enthalten. Typische Hilfs- und Zusatzstoffe sind Gleitmittel und Entformungsmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Hitze und Verfärbung, Farbstoffe, Pigmente, anorganische und/oder organische Füllstoffe, fungistatisch und bakteriostatisch wirkende Substanzen und deren Mischungen.

Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 , dem Taschenbuch für Kunststoff-Additive von R.Gächter u. H.Müller (Hanser Verlag München 1990) oder der DE-A 29 01 774 zu entnehmen.

Als Lichtstabilisatoren f) werden vorzugsweise UV-Stabilisatoren, Antioxidantien und/oder HALS-Verbindungen eingesetzt. Nähere Angaben sind der Fachliteratur zu entnehmen und beispielsweise in Plastics Additives Handbook, 2001 5th. Ed., Carl Hanser Verlag, München, beschrieben.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch andere Elastomere wie Kautschuk, Ethylen/Vinylacetatcopolymere, Styrol/Butadiencopolymere sowie andere TPU können verwendet werden.

Geeignete Katalysatoren e) sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen, wie Zinndiacetat, Zinndioctoat, Zinndilaurat oder die Zinndialkylsalze aliphatischer Carbonsäuren, wie Dibutylzinndiacetat oder Dibutylzinndilaurat oder ähnliche. Bevorzugte Katalysatoren sind organische Metallverbindungen, insbesondere Titansäureester, Eisen-, Zinn-, Zirkon- und Wismuthverbindungen. Die Gesamtmenge an Katalysatoren in den erfindungsgemäßen TPU beträgt in der Regel vorzugsweise 0 bis 5 Gew.-%, bevorzugt 0 bis 2 Gew.-%, bezogen auf die Gesamtmenge an TPU.

Die Zugabe der Hilfs- und Zusatzstoffe kann während des Herstellprozesses und/oder bei einer zusätzlichen Kompoundierung dem TPU eingemischt werden. Um anschließend eine sinterfähige Formmasse zu bekommen, wird das TPU bevorzugt unter Einfluss von flüssigem Stickstoff feingemahlen. Das sinterfähige Produkt hat dabei vorzugsweise eine mittlere Teilchengrößenverteilung von 50 bis 800 µm.

Die erfindungsgemäßen TPU werden vorzugsweise im Powder-Slush-Verfahren eingesetzt.

Die erfindungsgemäßen TPU werden bevorzugt zur Herstellung von wärmebeständigen, lichtstabilen Formteilen und Häuten mit geringem Fogging und gutem Knickverhalten eingesetzt.

Die Erfindung soll anhand der nachfolgenden Beispiele näher erläutert werden.

Im folgenden verwendete Abkürzungen:
- PE 225B: Polyesterdiol mit einem Molekulargewicht von Mₙ = 2250 g/mol; Produkt der Firma Bayer MaterialScience AG
- Acclaim 2220 N: Polyetherdiol (Mischether aus C₃ und C₂-Alkyleneinheiten) mit einem Molekulargewicht von Mₙ = 2250 g/mol; Produkt der Firma Bayer MaterialScience AG
- HDI: 1,6-Hexamethylendiisocyanat
- IPDI: Isophorondiisocyanat
- HDO: 1,6-Hexandiol
- BDO: 1,4-Butandiol
- Reofos BAPP: Bisphenol A Diphenylphosphat; Produkt der Firma Great Lakes Corp.; Molekulargewicht: > 693
- DMP: Dimethylphthalat; Molekulargewicht: 194
- Irganox 1010: Antioxidant der Firma Ciba Specialty Chemicals GmbH
- Tinuvin 622: HALS-Stabilisator der Firma Ciba Specialty Chemicals GmbH
- Tinuvin 234: Licht-Stabilisator auf Basis eines Benzotriazoles der Firma Ciba Specialty Chemicals GmbH
- EBS: Ethylen-bis-stearylamid
- Elftex 435: Farbruss von der Firma Cabot Corp.
- DBTL: Dibutylzinndilaurat

### Beispiele

### Allgemeine Beschreibung der Herstellung des TPU:

Ein Gemisch aus 368 g PE225B, 160 g Acclaim 2220N, x g HDO und y g BDO und z g Weichmacher mit 0,5 Gew.-% Irganox 1010 (bezogen auf das gesamte TPU) und etwa 60 ppm DBTL (bezogen auf die Polyolmenge c)) wurde unter Rühren mit einem Flügelrührer mit einer Drehzahl von 500 Umdrehungen pro Minute (UpM) auf 130°C hochgeheizt, wonach o g HDI und p g IPDI zugegeben wurden. Anschließend wurde bis zum maximal möglichen Viskositätsanstieg gerührt und dann das TPU ausgegossen. Zum Schluss wurde das Material 30 min bei 80°C thermisch nachbehandelt und anschließend granuliert. Die genauen Rezepturen (Angaben zu x, y, z, o und p) sind der Tabelle 1 zu entnehmen.

**Tabelle 1 Rezepturen**

| **Beispiel** | **Art des Beispiels** | **x HDO [g]** | **y BDO [g]** | **z Weichmacher [g]** | **o HDI [g]** | **p IPDI [g]** |
|---|---|---|---|---|---|---|
| **1** | Vergleich | 68 | 0 | 0 | 134 | 0 |
| **2** | Vergleich | 68 | 0 | 313 Reofos BAPP (30 Gew.-%) | 134 | 0 |
| **3** | Vergleich | 68 | 0 | 313 DMP (30 Gew.-%) | 134 | 0 |
| **4** | Vergleich | 58 (90 Mol-%) | 8 (10 Mol-%) | 0 | 135 | 0 |
| **5** | Vergleich | 48 (80 Mol-%) | 16 (20 Mol-%) | 0 | 133 | 0 |
| **6** | Vergleich | 68 | 0 | 0 | 121 (90 Mol-%) | 18 (10 Mol-%) |
| **7** | Vergleich | 68 | 0 | 0 | 107 (80 Mol-%) | 35 (20 Mol-%) |
| **8** | Vergleich | 68 | 0 | 0 | 94 (70 Mol-%) | 53 (30 Mol-%) |
| **9** | Erfindungsgemäß | 58 (90 Mol-%)) | 8 (10 Mol-%) | 83 Reofos BAPP (10 Gew.-%) | 135 | 0 |
| **10** | Erfindungsgemäß | 68 | 0 | 82 Reofos BAPP (10 Gew.-%) | 121 (90 Mol-%) | 18 (10 Mol-%) |
| **11** | Erfindungsgemäß | 58 (90 Mol-%) | 8(10 Mol-%) | 23 Reofos BAPP (3 Gew.-%) | 135 | 0 |
| **12** | Erfindungsgemäß | 58 (90 Mol-%) | 8 (10 Mol-%) | 81 Reofos BAPP (10 Gew.-%) | 128 (95 Mol-%) | 9 (5 Mol-%) |

Zu dem gemäß der allgemeinen Beschreibung hergestellten TPU-Granulat wurden Tinuvin 234, Tinuvin 622, EBS (alle jeweils 0,5 Gew.-%, bezogen auf TPU) und Farbruß (2 Gew.-%, bezogen auf TPU, Elftex 435) zugegeben und auf einem Extruder des Typs DSE 25, 4 Z, 360 Nm mit folgendem Aufbau:
1. kalte Einzugszone mit Förderelementen,
2. erste Heizzone (165°C) mit erster Knetzone,
3. zweite Heizzone (175°C) mit Förderelemente und zweiter Knetzone,
4. dritte Heizzone (180°C) mit Knetzone, Förderelemente und Vakuumentgasung,
5. Umlenkkopf (185°C) und Düse (180°C),
mit einer Förderleistung von 10 kg/h bei einer Drehzahl von 220 U/min extrudiert und anschließend mit einem Strang-Granulator zu Granulat aufgearbeitet.

Das Mahlen des hergestellten kompoundierten Granulats erfolgte mit einer Mühle der Firma Netzsch-Condux, Typ CUM100 mit einer Mahlfrequenz von 21000 U/min. Das Granulat wurde dabei unter Einfluss von flüssigem Stickstoff gekühlt und gleichmäßig in die Mühle eingegeben. Das fertige Pulver wurde anschließend getrocknet im Trockenschrank getrocknet (2 Stunden, 90°C). Die mittlere Partikelgrößenverteilung betrug dabei 50 bis 500 µm.

Das getrocknete Pulver wurde in einen schwenkbaren Pulverkasten eingefüllt. Eine auf 240°C vorgeheizte genarbte Metallplatte aus Nickel wurde auf den Pulverkasten geklemmt und mehrere Male geschwenkt, damit das Pulver auf die heiße Platte gleichmäßig aufgesintert wurde. Anschlie-ßend wurde die genarbte Platte mit dem aufgesinterten TPU eine Minute bei 240°C im Ofen nachgetempert. Anschließend wurde die Platte gekühlt, und die genarbte TPU-Haut konnte entformt werden.

### Bestimmung der Wärmestabilität:

Die Wärmestabilität wurde durch eine Lagerung der geslushten Haut, hängend im Umlufitrockenschrank bei 120°C (mit +/- 2°C Toleranz) über eine Zeitspanne von 500 Stunden ermittelt. Nach der Lagerung wurde geprüft, ob das Material ein Aufschmelzen/Aufglänzen der genarbten Seite zeigt.

### Bestimmung der technischen Verarbeitbarkeit:

Beim Extrudieren und Mahlen wurde auf die technische Verarbeitbarkeit geachtet. Dabei wurden z.B. das Einzugsverhalten im Extruder bei der Reextrusion oder das Mahlverhalten sehr kritisch beobachtet. Eventuell auftretende Probleme beim Mahlen manifestierten sich vor allem durch z.B. Verstopfung der Mühle, zu hohe Grobanteile im Pulver oder Anschmelzen des Materials in der Mühle.

### Bestimmung des Knickverhaltens

Das Knickverhalten der gefertigten TPU-Haut wurde durch eine qualitative Beurteilung an der geslushten Haut ermittelt.

Das Knickverhalten wurde durch ein Knicken der Haut und anschließender qualitativer Beurteilung der resultierenden Knicke in der Haut beurteilt.

### Bestimmung des Foggingverhaltens:

Für die Foggingbestimmung wurde die Kondensatmenge gemäß DIN 75201 (16 Stunden bei 120°C) bestimmt.

Die Ergebnisse der Untersuchungen sind der Tabelle 2 zu entnehmen.

**Tabelle 2 Ergebnisse**

| **Beispiel** | **Art des Beispiels** | **Wärmelagerung** | **Technische Verarbeitbarkeit** | **Fogging (Kondensatmenge in mg)** | **Knickverhalten** |
|---|---|---|---|---|---|
| **1** | Vergleich | Kein Aufschmelzen | Gut | 3,0 | schlecht |
| **2** | Vergleich | Kein Aufschmelzen | schlecht | 4,4 | Gut |
| **3** | Vergleich | Kein Aufschmelzen | schlecht | 32 | Gut |
| **4** | Vergleich | Kein Aufschmelzen | Gut | 3,7 | schlecht |
| **5** | Vergleich | Kein Aufschmelzen | Gut | 3,4 | schlecht |
| **6** | Vergleich | Kein Aufschmelzen | Gut | 2,9 | schlecht |
| **7** | Vergleich | Kein Aufschmelzen | Gut | 2,6 | schlecht |
| **8** | Vergleich | Aufschmelzen | schlecht | 3,6 | Gut |
| **9** | Erfindungsgemäß | Kein Aufschmelzen | Gut | 4,0 | Gut |
| **10** | Erfindungsgemäß | Kein Aufschmelzen | Gut | 2,3 | Gut |
| **11** | Erfindungsgemäß | Kein Aufschmelzen | Gut | 2,0 | Gut |
| **12** | Erfindungsgemäß | Kein Aufschmelzen | Gut | 2,7 | Gut |

Im Vergleichsbeispiel 1 wird eine TPU Rezeptur gemäß dem Stand der Technik hergestellt und untersucht. Das Knickverhalten ist unzureichend.

In den Vergleichsbeispielen 2 und 3 werden Weichmacher gemäß dem Stand der Technik eingesetzt. Das Knickverhalten ist zwar ausreichend, aber im Vergleich 3 ist der Fogging-Wert zu hoch. Beim Kaltmahlen gibt es erhebliche technische Probleme durch Verstopfung der Mühle und Verkleben des Pulvers sowie Aufschmelzen in der Mühle.

In den Vergleichsbeispielen 4 und 5 ist das Knickverhalten schlecht.

In den Vergleichsbeispielen 6 bis 8 wird nur bei Vergleich 8 ein gutes Knickverhalten erzielt. Das TPU aus Vergleich 8 wird aber bei der Wärmelagerung angeschmolzen, und seine technische Verarbeitbarkeit ist nicht mehr gegeben (also unzureichend). Die Beispiele 6 und 7 zeigen ein nicht ausreichendes Knickverhalten.

Die erfindungsgemäßen Beispiele 9 bis 12 zeigen, dass man durch erfindungsgemäße Kombinationen von Weichmachern, Kettenverlängerern und/oder Diisocyanaten TPU herstellen kann, die alle Anforderungen in Bezug auf Aufschmelzverhalten, technische Verarbeitbarkeit, Fogging und vor allem Knickverhalten erfüllen.

## Patentansprüche

1. Lichtstabile, sinterfähige, aliphatische, thermoplastische Polyurethane, erhältlich aus
a) einer Isocyanatkomponente bestehend aus
a1) 100 bis 75 Mol-% 1,6-Hexamethylendiisocyanat
a2) 0 bis 25 Mol% eines aliphatischen Diisocyanates oder eines Gemisches aus aliphatischen Diisocyanaten, ausgenommen 1,6-Hexamethylendiisocyanat
b) einer Kettenverlängerungskomponente bestehend aus
b1) 100 bis 75 Mol-% eines Kettenverlängerers aus der Gruppe bestehend aus
1,2-Ethandiol, 1,3-Propandiol, 1,4-Butandiol, 1,5-Pentandiol, 1,6-Hexandiol, 1,10-Decandiol, 1,12-Dodecandiol, Diethylenglykol, Dipropylenglykol, Terephthalsäure-bis-ethylenglykol, Terephthalsäure-bis-1,4-butandiol, 1,4-Di(β-hydroxyethyl)-hydrochinon, 1,4-Di(β-hydroxyethyl)-bisphenol A,
b2) 0 bis 25 Mol-% eines Kettenverlängerers mit einem Molekulargewicht von 60 bis 400 oder eines Gemisches aus Kettenverlängerern,
wobei der Kettenverlängerer b1) nicht identisch ist mit dem Kettenverlängerer b2) und die arithmetische Summe der Prozentsätze a2) und b2) 2 bis 28 Mol-% beträgt,
c) mindestens einer Komponente mit einem zahlenmittleren Molekulargewicht von 450 bis 10000 g/mol und im Mittel mindestens 1,8 bis höchstens 3,0 zerewitinoffaktiven Wasserstoffatomen,
wobei das Verhältnis der Isocyanatgruppen aus a) zu den gegenüber Isocyanat reaktiven Gruppen aus b), c) und optional h) 0,9:1 bis 1,1:1 beträgt,
in Gegenwart von
d) 1 bis 30 Gew.%, bezogen auf thermoplastisches Polyurethan, eines oder mehrerer Weichmacher mit einem zahlenmittleren Molekulargewicht von 200 bis 10000 g/mol,
e) gegebenenfalls Katalysatoren, und unter Zusatz von
f) 0,1 bis 10 Gew.-%, bezogen auf thermoplastisches Polyurethan, Lichtstabilisatoren,
g) gegebenenfalls Zusatzmitteln und/oder Hilfsstoffen,
h) gegebenenfalls Kettenabbrechern.

2. Verwendung des thermoplastischen Polyurethans gemäß Anspruch 1 zur Herstellung von wärmebeständigen, lichtstabilen Formteilen und Häuten mit geringem Fogging.

3. Verwendung des thermoplastischen Polyurethans gemäß Anspruch 1 im Powder-Slush-Verfahren.

## Claims

1. Light-resistant, sinterable, aliphatic, thermoplastic polyurethanes, obtainable from
a) an isocyanate component consisting of
a1) 100 mol % to 75 mol % 1,6-hexamethylene diisocyanate
a2) 0 mol % to 25 mol % of an aliphatic diisocyanate or of a mixture of aliphatic diisocyanates, except 1.6-hexamethylene diisocyanate
b) a chain-extending component consisting of
b1) 100 mol % to 75 mol % of a chain-extender from the group consisting of
1,2-ethanediol, 1,3-propanediol, 1,4-butanediol, 1,5-pentanediol, 1,6-hexanediol, 1,10-decanediol, 1,12-dodecanediol, diethylene glycol, dipropylene glycol, terephthalic acid bis(ethylene glycol), terephthalic acid bis(1,4-butanediol), 1,4-di(β-hydroxyethyl)hydroquinone and 1,4-di(β-hydroxyethyl)bisphenol A
b2) 0 mol % to 25 mol % of a chain-extender with a molecular weight from 60 to 400 or of a mixture of chain-extenders,
chain-extender b1) not being identical with chain-extender b2), and the arithmetic sum of percentages a2) and b2) amounting to 2 mol % to 28 mol %,
c) at least one component with a number-average molecular weight from 450 g/mol to 10000 g/mol and, on average, at least 1.8 to at most 3.0 Tserevitinov-active hydrogen atoms,
the ratio of the isocyanate groups from a) to the groups that are reactive with isocyanate from b), c) and optionally h) amounting to 0.9:1 to 1.1:1,
in the presence of
d) 1 wt.% to 30 wt.%, relative to thermoplastic polyurethane, of one or more plasticisers with a number-average molecular weight from 200 g/mol to 10 000 g/mol,
e) optionally catalysts, and with addition of
f) 0.1 wt.% to 10 wt.%, relative to thermoplastic polyurethane, light stabilisers,
g) optionally additives and/or auxiliary substances,
h) optionally chain-terminators.

2. Use of the thermoplastic polyurethane according to Claim 1 for producing heat-resistant, light-resistant mouldings and skins with low fogging.

3. Use of the thermoplastic polyurethane according to Claim 1 in the powder-slush process.

## Revendications

1. Polyuréthannes thermoplastiques, aliphatiques, frittables, stables à la lumière, qui sont obtenus à partir de :
a) un composant isocyanate consistant en
a1) 100 à 75% en moles de 1,6-hexaméthylènediisocyanate,
a2) 0 à 25% en moles d'un diisocyanate aliphatique ou d'un mélange de diisocyanates aliphatiques, excepté le 1,6-hexaméthylènediisocyanate,
b) un composant d'allongement de chaîne, consistant en
b1) 100 à 75% en moles d'un agent d'allongement de chaîne du groupe consistant en le 1,2-ëthanediol, le 1,3-propanediol, le 1,4-butanediol, le 1,5-pentanediol, le 1,6-hexanediol, le 1,10-décanediol, le 1,12-dodécanediol, le diéthylèneglycol, le dipropylèneglycol, l'acide téréphtalique-bis-éthylèneglycol, l'acide téréphtalique-bis-1,4-butanediol, la 1,4-di(β-hydroxyéthyl)hydroquinone et le 1,4-di(β-hydroxyéthyl)bisphénol A,
b2) 0 à 25% en moles d'un agent d'allongement de chaîne avec un poids moléculaire allant de 60 à 400 g/mole ou un mélange d'agents d'allongement de chaîne,
où l'agent d'allongement de chaîne b1) n'est pas identique à l'agent d'allongement de chaîne b2) et la somme arithmétique des pourcentages de a2) et de b2) se situe dans l'intervalle allant de 2 à 28% en moles,
c) au moins un composant avec un poids moléculaire moyen en nombre allant de 450 à 10 000 g/mole et en moyenne, au moins 1,8 à au maximum 3,0 atomes d'hydrogène actifs selon Zerewitinoff,
où le rapport des radicaux isocyanate dans le composant a) aux radicaux réactifs avec les isocyanates dans les composants b), c) et le cas échéant h), se situe dans l'intervalle allant de 0,9:1 à 1,1:1,
en présence de:
d) 1 à 30% en poids, sur base du polyuréthanne thermoplastique, d'un ou de plusieurs plastifiants avec un poids moléculaire moyen en nombre allant de 200 à 10 000 g/mole,
e) le cas échéant, des catalyseurs, et avec addition de
f) 0,1 à 10% en poids, sur base du polyuréthanne thermoplastique, de stabilisants à la lumière,
g) le cas échéant, des additifs et/ou auxiliaires,
h) le cas échéant, des agents d'interruption de chaîne.

2. Utilisation des polyuréthannes thermoplastiques selon la revendication 1, pour la préparation d'articules moulés stables à la lumière, résistants à la chaleur et de peaux à faible embuage.

3. Utilisation des polyuréthannes thermoplastiques selon la revendication 1, dans un procédé Powder-Slush.
